# EUROPÄISCHE PATENTANMELDUNG

(11) **EP 4 776 083 A1**
(43) Veröffentlichungstag der Anmeldung: **15.07.2026**
(21) Anmeldenummer: 25150634.1
(22) Anmeldetag: 08.01.2025
(51) Int. Cl.: G05B 13/02, G05B 13/04, G05B 17/02

(54) **COMPUTER-IMPLEMENTIERTES VERFAHREN ZUM ERMITTELN VON MINDESTENS EINER REGELUNGSSTRATEGIE ZUM REGELN EINES TECHNISCHEN SYSTEMS**

(71) Anmelder: Siemens Aktiengesellschaft, 80333 München (DE)
(72) Erfinder: Hein, Daniel, 81549 München (DE); Limmer, Steffen, 80636 München (DE); Swazinna, Phillip, 85375 Neufahrn (DE)
(74) Vertreter: Siemens Patent Attorneys

(57) **Zusammenfassung**

Die Erfindung betrifft ein computer-implementiertes Verfahren zum Ermitteln von mindestens einer Regelungsstrategie zum Regeln eines technischen Systems, umfassend die Verfahrensschritte: a. Bereitstellen von einer Simulation hinsichtlich eines technischen Systems (S1); b. Ermitteln von mindestens einer optimierten Aktionstrajektorie basierend auf der Simulation mittels eines Optimierers (S2); c. Ermitteln von der mindestens einen Regelungsstrategie basierend auf der mindestens einen optimierten Aktionstrajektorie mittels maschinellem Lernen (S3); und d. Bereitstellen der mindestens einen Regelungsstrategie (S4).

Ferner betrifft die Erfindung ein technisches System und ein entsprechendes Computerprogrammprodukt.

## Beschreibung

### 1. Technisches Gebiet

Die Erfindung betrifft ein computer-implementiertes Verfahren zum Ermitteln von mindestens einer Regelungsstrategie zum Regeln eines technischen Systems. Ferner ist die Erfindung auf ein entsprechendes technisches System und ein Computerprogrammprodukt gerichtet.

### 2. Stand der Technik

Technische Systeme werden gemäß dem Stand der Technik häufig durch komplexe Regelungsstrategien geregelt, um eine optimale Leistung und Effizienz zu erreichen. Die Regelungsstrategien basieren oft auf jahrelanger Erfahrung, folglich Expertenwissen und tiefgreifendem Verständnis des jeweiligen technischen Systems. Für neue technische Systeme oder technische Systeme, welche schwer zu modellierende technische Komponenten aufweisen, ist es jedoch eine Herausforderung, effektive Regelungsstrategien zu entwickeln.

In solchen Fällen werden zunehmend Verfahren des maschinellen Lernens, insbesondere des bestärkenden Lernens (engl. "Reinforcement Learnings", abgekürzt RL), eingesetzt, um die Regelungsstrategien automatisch aus Simulationen oder aufgezeichneten Daten zu lernen. Das bestärkende Lernen verspricht, auch für komplexe Systeme optimale Strategien zu finden, ohne auf umfangreiches Vorwissen angewiesen zu sein.

Allerdings stößt auch das bestärkende Lernen bei besonders anspruchsvollen Regelungsaufgaben an seine Grenzen. Der Suchraum möglicher Regelungsstrategien kann so groß sein, dass selbst fortschrittliche RL-Algorithmen Schwierigkeiten haben, optimale Lösungen zu finden. Oft konvergieren sie nur zu suboptimalen Ergebnissen oder benötigen extrem lange Trainingszeiten und große Rechenressourcen.

Eine alternative Herangehensweise ist die Verhaltens-Klonierung (engl. "Behavior Cloning"), bei dem eine Regelungsstrategie aus aufgezeichneten Expertendaten abgeleitet wird. Die Verhaltens-Klonierung ermöglicht es, robuste und zuverlässige Regelungsstrategien zu erzeugen, die das in den Daten enthaltene Expertenwissen reproduzieren. Allerdings setzt dieser Ansatz voraus, dass bereits hochwertige Expertendaten für das zu regelnde technische System verfügbar sind. Mit anderen Worten erfordern die Ansätze gemäß dem Stand der Technik umfangreiches Expertenwissen als Ausgangslage.

Folglich besteht zunehmend ein Bedarf an einem Ansatz, welcher effektiv Regelungsstrategien für komplexe technische Systeme generieren kann, auch wenn kein umfangreiches Expertenwissen verfügbar ist.

Die vorliegende Erfindung stellt sich daher die Aufgabe ein computer-implementiertes Verfahren zum Ermitteln von mindestens einer Regelungsstrategie zum Regeln eines technischen Systems bereitzustellen, welches effizienter und zuverlässiger ist.

### 3. Zusammenfassung der Erfindung

Die oben genannte Aufgabe wird erfindungsgemäß durch ein computer-implementiertes Verfahren zum Ermitteln von mindestens einer Regelungsstrategie zum Regeln eines technischen Systems gelöst, umfassend die Verfahrensschritte:
a. Bereitstellen von einer Simulation hinsichtlich eines technischen Systems;
b. Ermitteln von mindestens einer optimierten Aktionstrajektorie basierend auf der Simulation mittels eines Optimierers;
c. Ermitteln der mindestens einen Regelungsstrategie basierend auf der mindestens einen optimierten Aktionstrajektorie mittels maschinellem Lernen; und
d. Bereitstellen der mindestens einen Regelungsstrategie.

Dementsprechend ist die Erfindung auf ein computer-implementiertes Verfahren zum Ermitteln von mindestens einer Regelungsstrategie zum Regeln eines technischen Systems gerichtet. Mit anderen Worten werden eine oder mehrere Regelungsstrategien bestimmt, welche auf das technische System angewendet werden können, um dieses zu regeln. Die Regelungsstrategie kann auch als Aktionsauswahlregel (engl. "Policy") verstanden werden. Mit anderen Worten ist eine Regelungsstrategie als Strategie, Plan oder Vorgehensweise zu verstehen, welche eingesetzt wird, um das technische System zu regeln oder zu steuern. Die Regelung erfolgt durch die Regelungsstrategie bevorzugt stabil und/oder effizient. Das technische System kann dabei als ein beliebiges technisches System ausgebildet sein, wie ein sicherheitskritisches technisches System, beispielsweise ein autonomes Fahrzeug oder eine industrielle Anlage.

Im ersten Verfahrensschritt wird die Simulation als Eingabe für die weiteren Verfahrensschritte bereitgestellt. Die Simulation bezieht sich auf das technische System. Die Eingabedaten können über eine oder mehrere Eingabeschnittstellen empfangen werden. Zusätzlich oder alternativ können die Ausgabedaten auch über eine oder mehrere Ausgabeschnittstellen gesendet werden. Die Schnittstellen können als serielle oder parallele Schnittstellen ausgebildet sein. Die Schnittstellen stellen vorteilhafterweise eine effiziente und reibungslose Datenübertragung zwischen Recheneinheiten sicher. Die Daten können bidirektional ausgetauscht werden ohne Datenstau.

Im zweiten Verfahrensschritt wird die optimierte Aktionstrajektorie bestimmt. Die Aktionstrajektorie ist dabei eine zeitliche Abfolge von Aktionen auf einem technischen System. Die Bestimmung erfolgt auf den Eingabedaten mittels des Optimierungsansatzes. Der Optimierungsansatz wird eingesetzt, um auf der Simulation des technischen Systems eine optimale Aktionstrajektorie zu suchen und zu finden. Mit anderen Worten kann hierzu ein Optimierer eingesetzt werden. Der Optimierer sucht und ermittelt eine optimierte Aktionstrajektorie gegeben der Simulation. Der Optimierer kann weitere Eingabedaten berücksichtigen, wie Startbedingungen, beispielsweise einen Startzustand. Die Optimierung kann für eine ganze Reihe von unterschiedlichen Eingabedaten, wie die Startbedingungen, wiederholt werden. Die Optimierung kann auch parallel ausgeführt werden.

Die optimierte Aktionstrajektorie aus dem zweiten Verfahrensschritt wird verwendet, um die Regelungsstrategie zu bestimmen. Für diesen Verfahrensschritt wird ein maschinelles Lernmodel verwendet. Die optimierte Aktionstrajektorie wird als Eingabe in dem maschinellen Lernmodell verwendet, um aus den Daten die Regelungsstrategie zu ermitteln. Die Regelungsstrategie kann als "Experten"-Regelung vorliegen.

Im letzten Verfahrensschritt wird die Regelungsstrategie bereitgestellt.

Die vorliegende Erfindung stellt folglich sicher, dass die Regelungsstrategie zuverlässig und effizient bestimmt wird. Die Sicherheit des zugrundeliegende technischen Systems, welches mit dieser Regelungsstrategie betrieben wird, wird dadurch ebenfalls signifikant erhöht. Im Hinblick auf autonome Fahrzeuge oder industrielle Anlagen wird somit die Steuerung bzw. Regelung erheblich verbessert und die Gefahren für die Menschen und Maschinen reduziert.

Im Gegensatz zum Stand der Technik kann eine Trajektorienoptimierung mithilfe einer Simulation eines komplexen technischen Systems automatisch nach optimalen Experten-Daten suchen. Die Optimierung gemäß der Erfindung kommt ohne Vorwissen über optimale Regelungen aus. Ferner kann die Optimierung sicher offline durchgeführt werden.

Sofern nicht anders angegeben, können alle Schritte des computerimplementierten Verfahrens von mindestens einer Recheneinheit durchgeführt werden, die auch als Datenverarbeitungsvorrichtung bezeichnet werden kann. Insbesondere kann die Datenverarbeitungsvorrichtung, die mindestens eine Verarbeitungsschaltung umfasst, die zur Durchführung eines erfindungsgemäßen computerimplementierten Verfahrens ausgebildet oder angepasst ist, die Schritte des computerimplementierten Verfahrens durchführen. Hierzu kann in der Datenverarbeitungsvorrichtung insbesondere ein Computerprogramm gespeichert sein, das Anweisungen umfasst, die bei Ausführung durch die Datenverarbeitungsvorrichtung, insbesondere die mindestens eine Verarbeitungsschaltung, die Datenverarbeitungsvorrichtung veranlassen, das computerimplementierte Verfahren auszuführen.

Das technische System kann beispielsweise eine Maschine oder Anlage oder mehrere physisch, virtuell und/oder funktional verbundene Maschinen und/oder Anlagen beinhalten. Beispielhafte aber nicht beschränkende Anwendungsgebiete sind Systeme im Bereich der Energietechnik, etwa Anlagen und/oder Maschinen zur Energieerzeugung, zur Energieumwandlung und/oder zum Energietransport. Weitere nicht beschränkende Anwendungsgebiete liegen im Bereich der Mobilität, etwa im Eisenbahnverkehr, sodass das System beispielsweise Zugkomponenten, Zugmaschinen, Gleisanlagen oder Teile davon, Personenkraftwagen, Lastkraftwagen und so weiter beinhalten kann, im Bereich der Industrieproduktion, sodass das System beispielsweise Produktionsmaschinen oder -anlagen, Fertigungsmaschinen oder -anlagen, Testvorrichtungen, Überwachungsanlagen, Fördermaschinen oder -anlagen, verfahrenstechnische Anlagen und so weiter beinhalten kann. Weitere nicht beschränkende Anwendungsgebiete liegen im Bereich der Medizintechnik, so dass das System beispielsweise Vorrichtungen zur medizinischen Bildgebung, etwa MRT-Systeme, röntgenbasierte Bildgebungssysteme wie zum Beispiel CT-Systeme, ultraschallbasierte Bildgebungssysteme, PET-Systeme und so weiter beinhalten kann. Das System kann auch eines oder mehrere Robotersysteme beinhalten.

In einer Ausgestaltung ist der Optimierer für die Trajektorienoptimierung konfiguriert, bevorzugt gradientenbasiert oder gradientenfrei. Durch die Nutzung der Trajektorienoptimierung kann das

Verfahren effizient im Raum der Aktionen oder Aktionstrajektorien suchen. Dies kann einfacher sein als die Suche im Raum möglicher Steuerungsstrategien, insbesondere für komplexe technische Systeme.

In einer weiteren Ausgestaltung ist die Simulation eine physikalische Simulation des technischen Systems, bevorzugt eine Modellierung und Simulation des technischen Systems. Die Verwendung einer physikalischen Simulation ermöglicht eine genaue Darstellung des Verhaltens des technischen Systems und ermöglicht die Generierung realistischer und anwendbarer optimierter Aktionstrajektorien.

In einer weiteren Ausgestaltung ist die Simulation ein datenbasiertes Modell, bevorzugt ein maschinelles Lernmodell. Das datenbasierte Modell kann vorteilhafterweise komplexe Systemdynamiken erfassen, die physikalisch schwer zu modellieren sind. Dies kann potenziell zu genaueren optimierten Aktionstrajektorien für bestimmte Arten von technischen Systemen führen. Als maschinelles Lernmodell kann ein Neuronales Netzwerk verwendet werden, welches mit Daten des technischen Systems trainiert wurde.

In einer weiteren Ausgestaltung weist das computer-implementierte Verfahren weiterhin auf
- Bereitstellen von mindestens einem weiteren Eingabedatenelement, ausgewählt aus der Gruppe bestehend aus: eine Startbedingung und ein externer Einfluss, und wobei
- die Ermittlung der mindestens einen Regelungsstrategie unter Berücksichtigung des mindestens einen weiteren Eingabedatenelements erfolgt.

Dementsprechend kann die Simulation mit weiteren Daten ergänzt werden. Die zusätzlichen Daten haben sich hinsichtlich Ermittlung der optimierten Aktionstrajektorie als besonders vorteilhaft erwiesen. Die Zuverlässigkeit der Ermittlung und somit des Ergebnisses in Form der optimierten Aktionstrajektorie kann dadurch signifikant erhöht werden. Die Einbeziehung zusätzlicher Eingabedatenelemente ermöglicht es dem Verfahren mit anderen Worten Regelungsstrategien zu generieren, die robust gegenüber verschiedenen Startbedingungen und externen Einflüssen sind. Dadurch wird die Anwendbarkeit und Effektivität der resultierenden Regelungsstrategien verbessert.

In einer weiteren Ausgestaltung ist die mindestens eine optimierte Aktionstrajektorie eine optimale Zustands-Aktions-Trajektorie, wobei die optimale Zustands-Aktions-Trajektorie umfasst, welche Aktion optimalerweise in einem entsprechenden Zustand ausgeführt wird.

In einer weiteren Ausgestaltung verwendet das maschinelle Lernen ein Lernmodell, bevorzugt ein Diffusionsmodell. Das Diffusionsmodell hat sich als besonders vorteilhaft erwiesen, da es in der Lage ist Aktionen aus unterschiedlichen Wahrscheinlichkeitsverteilungen korrekt zu repräsentieren. Ferner kann das Diffusionsmodell derart konfiguriert sein, mehrstufige Aktionssequenzen zu erzeugen. Beispielsweise kann bei einem technischen System ein Zustand eintreten, bei dem es gut ist, einen Hebel ganz nach rechts oder ganz nach links zu stellen. Besonders nachteilig ist es jedoch den Hebel mittig stehen zu lassen. Der Optimierer ermittelt einmal die optimale Aktion "rechts" und einmal die optimale Aktion "links" für diese Situation. Die Verhaltens-Klonierung-Ansätze, die für die entsprechende Situation einfach den Mittelwert aus beiden optimalen Aktionen wählen würden, wären nur in der Lage eine suboptimale Regelungsstrategie zu finden. Die Diffusionsmodelle hingegen haben die Möglichkeit diese Verteilung korrekt zu erfassen und sich auf eine der optimalen Aktionen festzulegen. Zusätzlich oder alternativ kann es statt einer Ein-Schritt Regelung weiterhin vorteilhaft sein mithilfe von Diffusionsmodellen gleich mehrere Schritte in die Zukunft abzudecken.

Für die Verhaltens-Klonierung können mit geringem Aufwand Diffusionsmodelle mit unterschiedlicher Komplexität bei der Modellausführung verwendet werden. Dadurch kann eine bzgl. der Rechenkomplexität optimale Regelungsstrategie gefunden werden, welche die Experten-Daten gerade noch exakt reproduzieren kann. Die Ausführung eines solchen Modells kann daher auf einer günstigeren Hardware oder mit einer niedrigeren Zykluszeit erfolgen. Im Gegensatz dazu ist eine solche Reduktion der Komplexität mit bekannten Reinforcement Learning Verfahren gemäß dem Stand der Technik nur schwer und mit sehr hohem Zeitaufwand möglich.

In einer weiteren Ausgestaltung weist das computer-implementierte Verfahren weiterhin auf
- Anwenden der mindestens einen Regelungsstrategie auf das technische System oder eine andere Recheneinheit zum Regeln des technischen Systems;
- Anpassen der mindestens einen Regelungsstrategie, bevorzugt zur Laufzeit und/oder mittels maschinellem Lernen; und /oder
- Lernen unter Verwendung der mindestens einen Regelungsstrategie als Startpunkt, wobei das Lernen bevorzugt bestärkendes Lernen ist und/oder auf Daten oder einer Simulation erfolgt.

Dementsprechend kann die Regelungsstrategie direkt auf dem technischen System installiert werden und/oder bei Bedarf durch Anpassungen zur Laufzeit (z.B. Online Learning) weiter verbessert werden. Alternativ oder zusätzlich kann die Regelungsstrategie als Startpunkt für Maschinelles Lernen auf der Simulation verwendet werden, um eine weitere Verbesserung zu erreichen. Als maschinelles Lernen kann bestärkendes Lernen verwendet werden.

Diese zusätzlichen Schritte ermöglichen die praktische Implementierung, Verfeinerung und weitere Verbesserung der Regelungsstrategie, wodurch ihre Effektivität und Anpassungsfähigkeit in realen Anwendungen verbessert wird.

Im Unterschied zu bekannten Ansätzen wie bestärkendem Lernen, kann das erfindungsgemäße Verfahren die automatisch generierten Experten-Daten nutzen, um die Verhaltens-Klonierung (z.B. durch Diffusionsmodelle) durchzuführen. Hierbei wird eine Experten-Regelungsstrategie erstellt, welche das Ziel hat, die optimierten Aktionen aus den Experten-Daten nachzuahmen. Die so gelernte Regelungsstrategie kann entweder direkt auf dem technischen System angewendet werden, oder als Startpunkt für einen Algorithmus basierend auf bestärkendem Lernen verwendet werden. Auf diese Weise können Regelungen deutlich schneller gelernt werden. Darüber hinaus wird in manchen Fällen das Finden der optimalen Lösung nur mit guten Startpunkten aus der Verhaltens-Klonierung möglich sein. Des Weiteren ermöglicht der Zwischenschritt über die Aktionssequenzen eine zwischengeschaltete Begutachtung durch einen Systemexperten, welcher beurteilen kann, ob die Sequenzen als vorteilhaft und realistisch betrachtet werden können. Dies wäre nicht möglich, wenn direkt eine nicht interpretierbare Regelungsstrategie gelernt würde.

In einer weiteren Ausgestaltung weist das computer-implementierte Verfahren weiterhin auf
- Ausgeben der mindestens einen Regelungsstrategie und/oder anderer zugehöriger Daten auf einer Anzeigeeinheit,
- Speichern der mindestens einen Regelungsstrategie und/oder anderer zugehöriger Daten in einer Speichereinheit, und/oder
- Übermitteln der mindestens einen Regelungsstrategie und/oder anderer zugehöriger Daten an eine Recheneinheit.

Dementsprechend können eine oder mehrere Maßnahmen nach der Bereitstellung der Regelungsstrategie des erfindungsgemäßen Verfahrens eingeleitet werden. Die Maßnahmen können gleichzeitig, nacheinander oder auch stufenweise durchgeführt werden.

Als erstes kann die Regelungsstrategie einem Nutzer oder einem Anwender auf einer Anzeigeeinheit einer Recheneinheit angezeigt werden. Weiterhin kann die Regelungsstrategie gespeichert werden, die Regelungsstrategie selbst oder in Form einer entsprechenden Nachricht oder Mitteilung an eine andere Einheit, wie ein Endgerät, eine Steuereinheit oder sonstige Recheneinheit übertragen werden. Die empfangende Recheneinheit kann nach dem Empfang ebenfalls weitere entsprechende Maßnahmen einleiten. Weitere Maßnahmen sind beispielsweise Steuerungsmaßnahmen, Überprüfung der Regelungsstrategie und/oder Freigabe der Regelungsstrategie.

Beispielsweise kann eine Recheneinheit nach erfolgter Freigabe die Regelungsstrategie oder eine Mitteilung über die Freigabe empfangen und in Abhängigkeit von dieser das technische System betreiben, wie steuern.

Dies hat den Vorteil, dass jegliche Maßnahmen auch zuverlässig und zeitnah umgesetzt werden.

Ferner betrifft die Erfindung eine Datenverarbeitungsvorrichtung zum Durchführen des obigen Verfahrens.

Die Erfindung betrifft ferner ein Computerprogrammprodukt mit einem Computerprogramm, das Mittel zur Durchführung des oben beschriebenen Verfahrens aufweist, wenn das Computerprogramm auf einer programmgesteuerten Einrichtung zur Ausführung gebracht wird.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen. Als programmgesteuerte Einrichtung kommt insbesondere eine Steuereinrichtung, wie beispielsweise eine Industriesteuerungs-PC oder eine Speicherprogrammierbare Steuerung oder ein Programmable Logic Controller, kurz PLC, oder ein Mikroprozessor für eine Smartcard oder dergleichen in Frage.

### 4. Kurze Beschreibung der Zeichnungen

In der folgenden detaillierten Beschreibung werden vorliegend bevorzugte Ausführungsformen der Erfindung weiter beschrieben mit Bezug auf die folgende Figur.

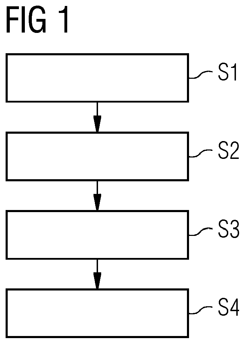

FIG 1 zeigt ein schematisches Ablaufdiagramm des erfindungsgemäßen Verfahrens.

### 5. Beschreibung der bevorzugten Ausführungsformen

Im Folgenden werden bevorzugte Ausführungsformen der vorliegenden Erfindung in Bezug auf die Figur 1 beschrieben.

Figur 1 stellt ein Ablaufdiagramm des erfindungsgemäßen Verfahrens mit den Verfahrensschritten S1 bis S4 schematisch dar.

Im ersten Verfahrensschritt wird eine Simulation hinsichtlich eines technischen Systems als Eingabe bereitgestellt S1. In einem weiteren Verfahrensschritt wird mindestens eine optimierte Aktionstrajektorie basierend auf der Simulation mittels eines Optimierers ermittelt S2. In einem weiteren Verfahrensschritt wird die mindestens eine Regelungsstrategie basierend auf der mindestens einen optimierten Aktionstrajektorie mittels maschinellem Lernen bereitgestellt S3. Im letzten Verfahrensschritt wird die mindestens eine Regelungsstrategie als Ausgabe bereitgestellt S4.

### Ermitteln von mindestens einer optimierten Aktionstrajektorie basierend auf der Simulation mittels eines Optimierers S2

Im Hinblick auf die Optimierung kann es in komplexen technischen Systemen deutlich einfacher sein im Raum der Aktionen bzw. Aktionstrajektorien zu suchen anstatt im Raum der möglichen Regelungsstrategien (z.B. neuronale Netze die Zustände auf Aktionen abbilden). Dies ist der Fall, da die Anzahl der Parameter geringer gehalten werden kann. Dies ist vor allem für gradientenfreie Optimierer von großem Vorteil.

### Beispiel:

3-dimensionale Aktion & 100 Zeitschritte = 300 Parameter vs. ein kleines Netz mit 2 Hidden Layer a 50 Neuronen und einem 10-dimensionalem Zustandsraum = 3253 Parameter

## Patentansprüche

1. Computer-implementiertes Verfahren zum Ermitteln von mindestens einer Regelungsstrategie zum Regeln eines technischen Systems, umfassend die Verfahrensschritte:
a. Bereitstellen von einer Simulation hinsichtlich eines technischen Systems (S1);
b. Ermitteln von mindestens einer optimierten Aktionstrajektorie basierend auf der Simulation mittels eines Optimierers (S2);
c. Ermitteln der mindestens einen Regelungsstrategie basierend auf der mindestens einen optimierten Aktionstrajektorie mittels maschinellem Lernen (S3); und
d. Bereitstellen der mindestens einen Regelungsstrategie (S4).

2. Computer-implementiertes Verfahren nach Anspruch 1, wobei der Optimierer für eine Trajektorienoptimierung konfiguriert ist, bevorzugt gradientenbasiert oder gradientenfrei ist.

3. Computer-implementiertes Verfahren nach Anspruch 1 oder Anspruch 2, wobei die Simulation eine physikalische Simulation des technischen Systems ist, bevorzugt eine Modellierung und Simulation des technischen Systems.

4. Computer-implementiertes Verfahren nach Anspruch 1 oder Anspruch 2, wobei die Simulation ein datenbasiertes Modell ist, bevorzugt ein maschinelles Lernmodell.

5. Computer-implementiertes Verfahren nach einem der vorhergehenden Ansprüche, weiterhin aufweisend
- Bereitstellen von mindestens einem weiteren Eingabedatenelement, ausgewählt aus der Gruppe bestehend aus: eine Startbedingung und ein externer Einfluss, und wobei
- die Ermittlung der mindestens einen Regelungsstrategie unter Berücksichtigung des mindestens einen weiteren Eingabedatenelements erfolgt.

6. Computer-implementiertes Verfahren nach einem der vorhergehenden Ansprüche, wobei die mindestens eine optimierte Aktionstrajektorie eine optimale Zustands-Aktions-Trajektorie ist, wobei
die optimale Zustands-Aktions-Trajektorie umfasst, welche Aktion optimalerweise in einem entsprechenden Zustand ausgeführt wird.

7. Computer-implementiertes Verfahren nach einem der vorhergehenden Ansprüche, wobei das maschinelle Lernen ein Lernmodell verwendet, bevorzugt ein Diffusionsmodell.

8. Computer-implementiertes Verfahren nach einem der vorhergehenden Ansprüche, weiterhin aufweisend
- Anwenden der mindestens einen Regelungsstrategie auf das technische System oder eine andere Recheneinheit zum Regeln des technischen Systems;
- Anpassen der mindestens einen Regelungsstrategie, bevorzugt zur Laufzeit und/oder mittels maschinellem Lernen; und /oder
- Lernen unter Verwendung der mindestens einen Regelungsstrategie als Startpunkt, wobei das Lernen bevorzugt bestärkendes Lernen ist und/oder auf Daten oder einer Simulation erfolgt.

9. Computer-implementiertes Verfahren nach einem der vorhergehenden Ansprüche, weiterhin aufweisend
- Ausgeben der mindestens einen Regelungsstrategie und/oder anderer zugehöriger Daten auf einer Anzeigeeinheit,
- Speichern der mindestens einen Regelungsstrategie und/oder anderer zugehöriger Daten in einer Speichereinheit, und/oder
- Übermitteln der mindestens einen Regelungsstrategie und/oder anderer zugehöriger Daten an eine Recheneinheit.

10. Datenverarbeitungsvorrichtung zum Durchführen des Verfahrens nach einem der vorhergehenden Ansprüche.

11. Computerprogrammprodukt mit einem Computerprogramm, das Mittel zur Durchführung des Verfahrens nach einem der Ansprüche 1 bis 9 aufweist, wenn das Computerprogramm auf einer programmgesteuerten Einrichtung zur Ausführung gebracht wird.
